# EUROPEAN PATENT SPECIFICATION

(11) **EP 3 689 548 B1**
(45) Date of publication and mention of the grant of the patent: **29.06.2022**
(21) Application number: 20154303.0
(22) Date of filing: 29.01.2020
(51) Int. Cl.: B25B 27/00

(54) **A BLIND NUT FASTENING APPARATUS**
BLINDMUTTERBEFESTIGUNGSVORRICHTUNG
APPAREIL DE FIXATION D'ÉCROU BORGNE

(30) Priority: 30.01.2019 JP 2019013951
(43) Date of publication of application: 05.08.2020
(73) Proprietor: Nippon Pop Rivets And Fasteners Ltd., Tokyo 102-0094 (JP)
(72) Inventor: MORI, Daisuke, Toyohashi, Aichi (JP)
(74) Representative: SBD IPAdmin

(56) References cited:
- EP-A1- 0 043 217
- EP-A1- 2 409 814
- EP-A2- 0 456 269
- WO-A1-2013/180769
- GB-A- 1 457 326
- US-A- 5 605 070
- US-A1- 2011 271 504

## Description

The present invention relates to an apparatus for fastening a blind nut to a member to be mounted.

An apparatus for fastening a blind nut to a member to be mounted (a blind nut tool) is required to perform two operations: rotation of a mandrel (mounting of a blind nut to a mandrel) and stroke (fastening of a blind nut by axial, not rotational, movement).

In the case of the current pneumatic type blind nut tool, mounting is performed by an air motor, and fastening is performed by a hydraulic cylinder; however, in the case of an electric cordless blind nut tool, it is difficult to mount two motors -- one for mounting and one for fastening -- on the tool due to concerns about increased size and weight. In the case of a conventional tool with an electric cord, the mounting operation and the fastening operation are performed by one trigger operation; therefore, blind nut mounting and fastening cannot be operated individually, and fastening starts immediately after mounting is completed, so that it is necessary either to insert the blind nut into the work in advance or turn the blind nut by hand to mount it on the tool.

As described in Japanese Unexamined Patent Publication No. HEI7-256383, while a tool exists that can individually operate mounting and fastening with one motor, the workability thereof is not satisfactory because two trigger operations are required for the mounting operation and the fastening operation.

Additionally, in US Patent No. 2011/0,271,504, while the blind nut can be mounted by pressing a mandrel, another motor is required for mounting. Further, cordless tools on the market are only able to use either fastening stroke management or fastening load management for fastening management. In European Patent No. 3,202,536, measurement and the like can be performed together with the fastening force and stroke, but fastening control is performed only by the load.

WO 2013/180769 discloses a blind rivet fastening device in which a passage for collecting broken mandrels is provided other than on the axis of the motor. A large collection chamber is provided for broken mandrels. A collection chamber for broken mandrels is provided in front of a brushless electric motor in the axial direction. When the electric motor rotates, power from the electric motor is transmitted to a spindle positioned to the rear of the collection chamber via a second shaft positioned below the collection chamber. When the spindle rotates, a pulling head moves in the axial direction.

Further, these existing tools require a position confirmation sensor for confirming the positions of the forward end and the backward end of the tool, and if the sensor fails, the tool may be damaged.

Accordingly, an object of the present invention is to provide a blind nut fastening apparatus with improved mechanisms and controls for the mounting and fastening operations.

To achieve the above-stated object, the present invention is defined by the appendant claim 1, with preferable, but not essential, features found in the dependent claims.

According to the present invention, it is possible to provide a blind nut fastening apparatus with improved control for the mounting operation and the fastening operation.

The present invention will now be described, by way of example only and with reference to the following drawings:
FIG. 1 is a front view of a blind nut fastening apparatus according to an embodiment of the present invention.
FIG. 2 is a perspective cutaway view showing the parts of a motor unit and a power transmission unit of the blind nut fastening apparatus of FIG. 1.
FIG. 3 is a cross-sectional view of the blind nut fastening apparatus of FIG. 1.
FIG. 4 is a perspective view of a rear clutch nut.
FIG. 5 is a perspective view of a front clutch nut.
FIG. 6 is a perspective view of a spin shaft.
FIG. 7 is a view showing a connected state of a first clutch (a rear clutch nut and a front clutch nut) and a second clutch (a front clutch nut and a spin shaft).
FIG. 8 is a perspective view showing a state in which the first clutch and the second clutch of FIG. 7 are incorporated in the entire blind nut fastening apparatus.
FIG. 9 is a perspective view of a spindle clutch.
FIG. 10 is a perspective view of a nut clutch.
FIG. 11 is a diagram showing a connected state of a third clutch (a spindle clutch and a nut clutch).
FIG. 12 is a perspective view showing a state in which the third clutch of FIGS. 9 and 10 is incorporated in the entire blind nut fastening apparatus.
FIG. 13 is a block diagram of a control unit of the blind nut fastening apparatus according to the present invention.
FIG. 14 is a cross-sectional view showing an initial state of the blind nut fastening apparatus.
FIG. 15 is a cross-sectional view showing a state in which the blind nut is arranged at the tip of the mandrel and mounting is started.
FIG. 16 is a cross-sectional view showing a state in which the mounting of the blind nut to the blind nut fastening apparatus is completed.
FIG. 17 is a cross-sectional view showing a state in which the engagement of the rear clutch nut and the front clutch nut (first clutch) is released when the installation of the blind nut is completed.
FIG. 18 is a cross-sectional view showing a state in which a blind nut is fastened to a member to be mounted.
FIG. 19 is a cross-sectional view showing a state in which the third clutch is disengaged to prevent an overstroke of pulling of the spin shaft.

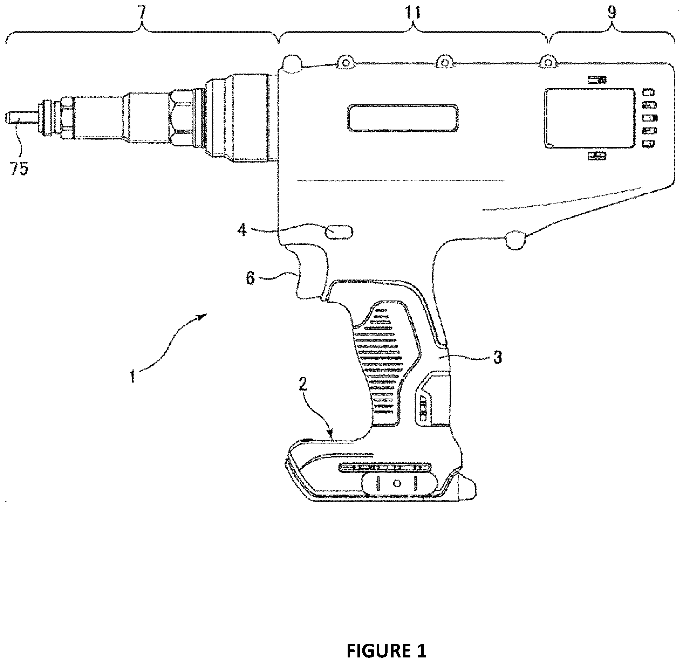

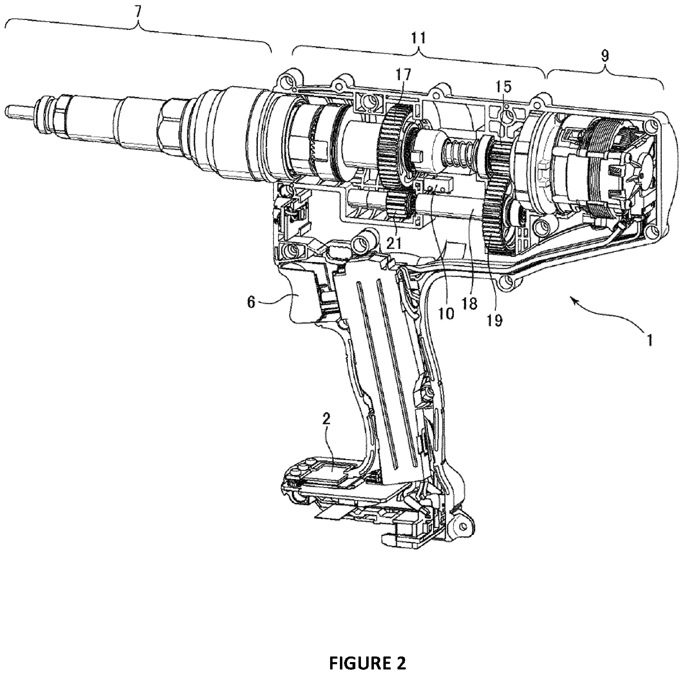

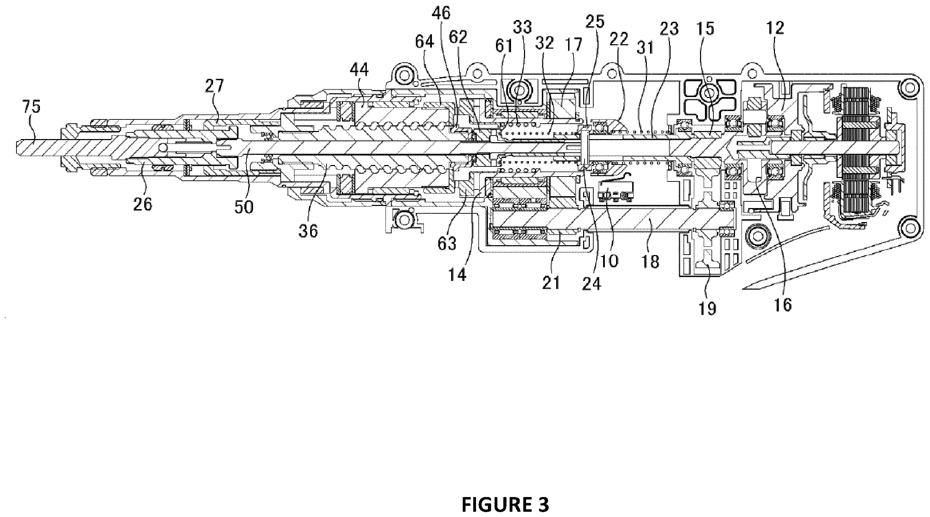

FIG. 1 is a front view of a blind nut fastening apparatus according to an embodiment of the present invention, having a front end to the left-hand side thereof and a rear end to the right-hand side. FIG. 2 is a perspective cutaway view showing the parts of a motor unit and a power transmission unit of the blind nut fastening apparatus of FIG. 1. FIG. 3 is a cross-sectional view of the blind nut fastening apparatus of FIG. 1.

The blind nut fastening apparatus 1 is provided with a blind nut fastening mechanism housed in a substantially cylindrical tool housing, and a handle 3 extending substantially perpendicularly from an intermediate position of the blind nut fastening mechanism. A battery is detachably attached to a lower portion 2 of the handle 3 (the battery is not shown).

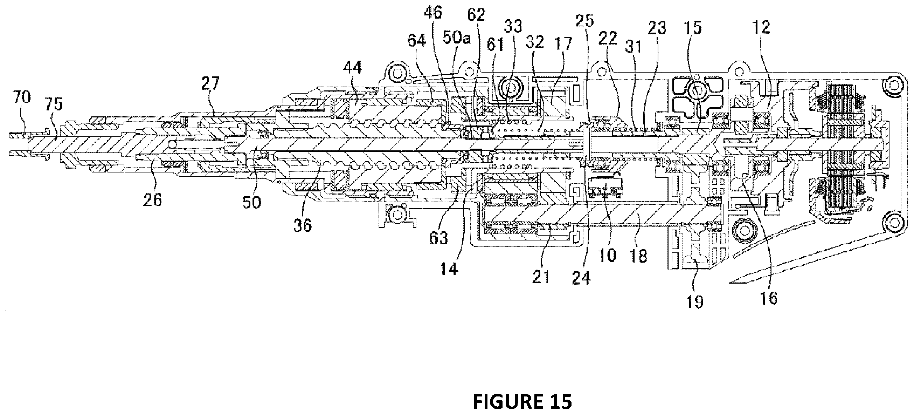

At the tip of the blind nut fastening apparatus 1 (at the front end of the apparatus), there is a mandrel 75; as will be described later, when the blind nut 70 (see Fig 15) is disposed at the tip of the mandrel 75 and pressed, the electric motor of the motor unit 9 operates, and the blind nut 70 can be automatically mounted on the mandrel 75.

A trigger 6 is established on the upper part of the handle 3. When the operator pulls the trigger 6, the mandrel 75 is pulled in the rear end direction to perform the fastening operation of the blind nut 70.

As shown in FIGS. 1 and 2, the blind rivet fastening mechanism comprises a nose 7 at the front (left side in FIG. 1), a motor unit 9 at the rear (right side in FIG. 1), and a power transmission unit 11 at the centre. The motor unit 9 accommodates an electric motor, in this example a brushless motor 12. The nose 7 is established with a configuration for gripping and pulling the shaft unit of the mandrel 75.

### [Motor Unit]

The motor unit 9 shown at the rear end position of FIGS. 1 to 3 will now be described. In this embodiment, the electric motor is a brushless motor 12. In the brushless motor 12, the rotor is a magnet, and the winding circuit is on the stator side. The rotation angle of the rotor is detected by a Hall element 13A (magnetic sensor) incorporated in the brushless motor 12. The electronic circuit for the brushless motor 12 performs switching at a timing according to the magnetic pole of the rotor. By detecting the number of rotations of the rotor of the brushless motor 12, the axial position of the retraction of the spin shaft 50 or the like can be obtained.

### [Power Transmission Unit]

The power transmission unit 11 has two systems: a first transmission system that transmits the rotation of the brushless motor 12 to the joint shaft 23, and a second transmission system that transmits the rotation of the brushless motor 12 to the spindle 14. The rotating operation of the joint shaft 23 contributes to the function of rotating the spin shaft 50, and the rotating operation of the spindle 14 contributes to the function of rotating the spin shaft 50.

As shown in FIG. 2, a power transmission unit 11 is established between the motor unit 9 and the nose 7. The power transmission unit 11 comprises a motor gear 15, a rear gear 19, a second shaft 18, a front gear 21, and a spindle gear 17.

A motor gear 15 connected to a motor shaft of the brushless motor 12 is arranged on the motor unit 9 side of the power transmission unit 11, and on the front side, a spindle gear 17 is arranged, connected to a spindle 14 having an axis coaxial with the axis of the motor shaft.

The motor gear 15 renders a rotational force to the joint shaft 23 in front thereof, and the rotation of the joint shaft 23 is transmitted to the spin shaft 50 via a rear clutch nut 61 and a front clutch nut 62, as will be described later.

Meanwhile, a second shaft 18 is established in a lower space between the motor gear 15 and the spindle gear 17. The second shaft 18 is rotatably supported around an axis in a direction parallel to the motor shaft of the brushless motor 12 and the axis of the spindle 14. A rear gear 19 that engages with the motor gear 15 is attached to the rear end of the second shaft 18, and a front gear 21 that engages with the spindle gear 17 is attached to the front end of the second shaft 18. The second shaft 18 is a single shaft; it connects the rear gear 19 and the front gear 21. The second shaft 18, the front gear 21 and the like are housed in a tool housing.

Since the rear gear 19 is engaged with the motor gear 15, when the brushless motor 12 rotates in the forward direction, the second shaft 18 rotates in the reverse direction. Since the front gear 21 is engaged with the spindle gear 17, when the second shaft 18 rotates in the reverse direction, the spindle gear 17 rotates forward and the spindle 14 rotates in the forward direction. Thereby, the spindle 14 rotates in the same direction as the brushless motor 12. In this manner, the rotation of the brushless motor 12 is transmitted to the spindle 14 via the second shaft 18. The rotation of the spindle 14 is transmitted to a spindle clutch 63 and a nut clutch 64, as will be described later, and further transmitted to a mechanism (stroke mechanism) that strokes the spin shaft 50 at a subsequent stage.

The gear ratio between the motor gear 15 and the rear gear 19, and the gear ratio between the front gear 21 and the spindle gear 17, are arbitrarily determined depending on the balance between the output of the brushless motor 12 and the fastening force of the blind nut.

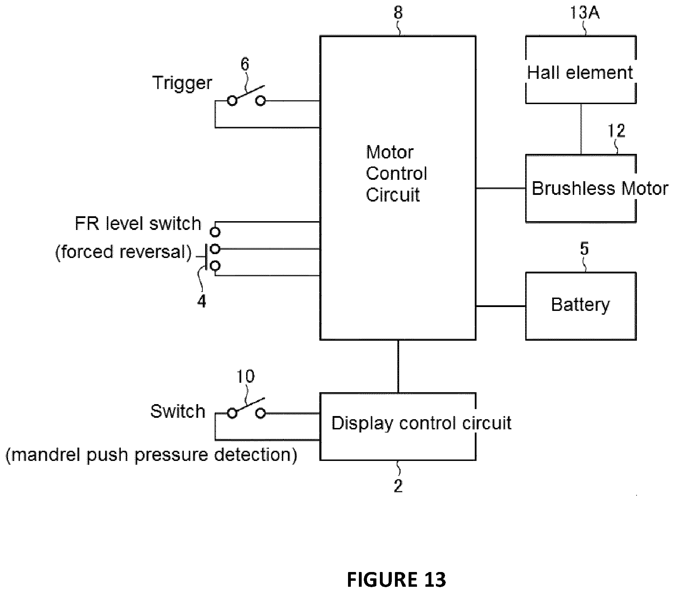

Further, a control unit is established, for example, on the handle 3 and the like (but is not limited thereto); it performs various controls by a motor control circuit 8 of FIG. 13 to be described later.

### [Rotating Operation of Spin Shaft (mandrel) When the Blind Nut is Attached]

When the blind nut 70 is pressed from the front of the mandrel 75, a detection collar 22 is pressed, passing through spin pull head 26, the spin shaft 50, pin 24 and pin holder 25, and the switch 10 is closed. The switch 10 is connected to the control unit and detects the signal to rotate the brushless motor 12 a fixed number of times.

Since the motor gear 15 is connected from the first reduction unit 16 to the joint shaft 23, the mandrel 75 rotates at the reduction ratio of the first reduction unit 16 via a rear clutch nut 61 and a front clutch nut 62 (first clutch), and a front clutch nut 62 and a spin shaft 50 (second clutch).

While the blind nut 70 is gradually mounted on the mandrel 75 by a fixed number of rotations of the mandrel 75, when the ball screw shaft 36 strokes a fixed distance, the second clutch is disengaged (detailed mechanism will be described later), and the rotation of the brushless motor 12 is not transmitted. Further, when the blind nut 70 is completely mounted on the mandrel 75 and a certain (pre-defined) rotational load is applied, the first clutch is disengaged (detailed mechanism will be described later), the rotational force to the spin shaft is not transmitted, and the rotation of the mandrel 75 stops, so that the blind nut 70 does not buckle due to excess rotational force.

### [Stroke Operation (Retraction Operation) of the Spin Shaft (Mandrel) when Fastening the Blind Nut]

After the blind nut 70 is mounted on the mandrel 75, when the blind nut is fastened to a member (in which the blind nut is to be mounted), a stroke operation of retracting the mandrel 75 in the rear end direction is performed by the stroke mechanism described below.

Here, in a state where the blind nut 70 is attached to the mandrel 75, the spin shaft 50 is stroked forward, and, as described later, the second clutch (the front clutch nut 62 and the spin shaft 50) is disengaged. Therefore, when the mounting of the blind nut 70 on the mandrel 75 is completed, rotational force is not transmitted on the spin shaft 50.

At the stage when the blind nut 70 is mounted on the mandrel 75, the rotation of the spindle 14 is connected to the third clutch (this being the combined effect of the spindle clutch 63 and the nut clutch 64). Then, the rotation of the third clutch rotates the ball screw nut 44 and causes the ball screw shaft 36 to stroke in the axial direction by screwing the inner screw of the ball screw nut 44 and the outer screw of the ball screw shaft 36.

The spin-pull head case 27 is disposed in front of the ball screw shaft 36 and moves in the same direction as the ball screw shaft 36 with the stroke of the ball screw shaft 36. The spin-pull head case 27 is configured to fit with the spin-pull head 26 arranged at the front stage of the spin shaft 50 when moved by a predetermined distance in the rear end direction; from this stage, the spin-pull head 26 is retracted along with the mandrel 75 toward the rear end.

However, before the installation of the blind nut 70 on the mandrel 75 is completed, an axial gap is established between the spin-pull head 26 and the spin-pull head case 27; at this stage, the mandrel 75 does not stroke.

Thereafter, in a state in which the mounting of the blind nut 70 to the mandrel 75 is completed, the ball screw nut 44 is rotated a predetermined number of times so that the ball screw shaft 36 is stroked backward, and there is no axial gap between the spin-pull head 26 and the spin-pull head case 27.

Therefore, when the trigger 6 is retracted in this state, the rotation of the brushless motor 12 is transmitted to the third clutch (the spindle clutch 63 and the nut clutch 64) via the spindle 14, the ball screw nut 44 is rotated by the rotational force from the third clutch, and the ball screw shaft 36 is moved in the direction of retraction. At this time, the spin-pull head case 27 linked to the ball screw shaft 36 is retracted without rotating the spin shaft 50 and the mandrel 75 via the spin-pull head 26, so that the blind nut 70 can be fastened to the member to be mounted.

### [Overview of Clutches]

As described above, provided in the present invention as clutches are a first clutch (rear clutch nut 61 and front clutch nut 62), a second clutch (front clutch nut 62 and spin shaft 50), and a third clutch (spindle clutch 63 and nut clutch 64).

The first clutch and the second clutch have a function of transmitting the rotational force of the joint shaft 23 to the rotation of the spin shaft 50. The second clutch has a function of preventing a rotational force from being transmitted to the spin shaft 50 by the constant stroke of the spin shaft 50. Further, the first clutch has a function of disengaging due to the constant rotational load and preventing the transmission of a rotational force.

Further, the third clutch transmits the rotational force of the spindle 14 to the ball screw nut 44, thereby connecting the stroke of the ball screw shaft 36 and the spin shaft 50, and it has a function of preventing the rotation force from being transmitted to the ball screw nut 44 so that the spin shaft 50 does not overstroke beyond a certain stroke.

### [First Clutch]

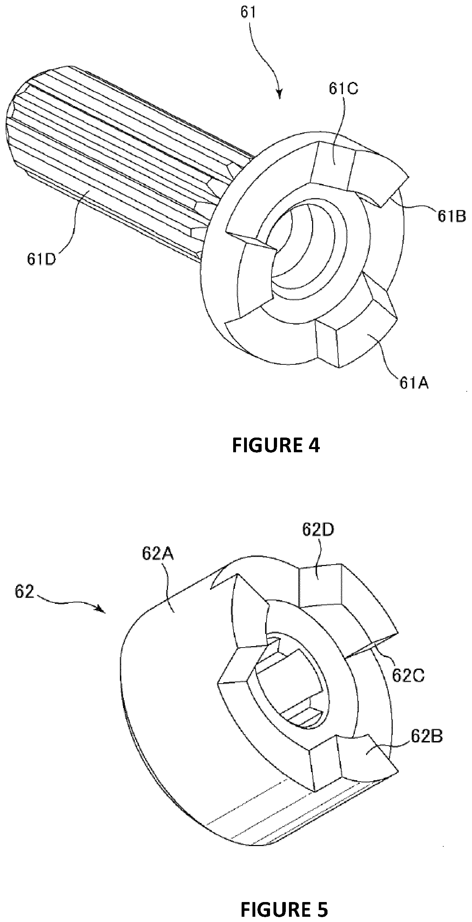

The structure of the first clutch can be explained from the rear clutch nut 61 shown in FIG. 4 and the front clutch nut 62 shown in FIG. 5.

The rear clutch nut 61 has a flange unit at the tip, and the flange unit is formed with a first sector-shaped portion 61A that is one step higher in an arc shape having a constant width in the radial direction. In the example of FIG. 4, three first fan-shaped portions 61A are formed at equal intervals but may be two or four or more. One end surface in the circumferential direction of the first fan-shaped portion 61A is a first vertical surface 61B perpendicular to the surface of the flange unit, and the other end surface is a first inclined surface 61C inclined relative to the surface of the flange unit. The rear clutch nut 61 is formed with a rear end portion 61D formed on the rear end side of the flange portion and is further adapted to receive a rotational force from the joint shaft 23 at the subsequent stage.

The front clutch nut 62 is arranged in front of the rear clutch nut 61 and engages with the rear clutch nut 61.

The front clutch nut 62 has a cylindrical portion 62A so that the spin shaft 50 can be inserted into the centre, and the rear end face has a second fan-shaped portion 62B that is one step higher in an arc shape having a constant width in the radial direction. In the example of FIG. 5, three second fan-shaped portions 62B are formed at equal intervals, but may be two or four or more. That is, the first fan-shaped portion 61A of the rear clutch nut 61 and the second fan-shaped portion 62B of the front clutch nut 62 have complementary shapes. One circumferential end surface of the second fan-shaped portion 62B is a second vertical surface 62C perpendicular to the rear end surface of the front clutch nut 62, and the other end surface is a second inclined surface 62D inclined with respect to the rear end surface of the front clutch nut 62.

The first inclined surface 61C of the rear clutch nut 61 comes into contact with the second inclined surface 62D of the front clutch nut 62 when the motor is rotating forward, so that the blind nut 70 is mounted on the mandrel 75. By completion of the attachment of the blind nut 70 to the mandrel 75 and the increased resistance to the rotation of the spin shaft, when a certain load is applied to this contact portion, due to the inclined structure of the first inclined surface 61C and the second inclined surface 62D, the first fan-shaped portion 61A of the rear clutch nut 61 is disengaged from the second fan-shaped portion 62B of the front clutch nut 62, and the rotational force is not transmitted; at this time, the rear clutch nut 61 moves toward the rear end while being supported by a spring 32.

On the other hand, the first vertical surface 61B of the rear clutch nut 61 comes into contact with the second vertical surface 62C of the front clutch nut 62 when the motor is rotating in the reverse direction, so that the load when removing the blind nut 70 from the mandrel 75 can be withstood.

### [Second Clutch]

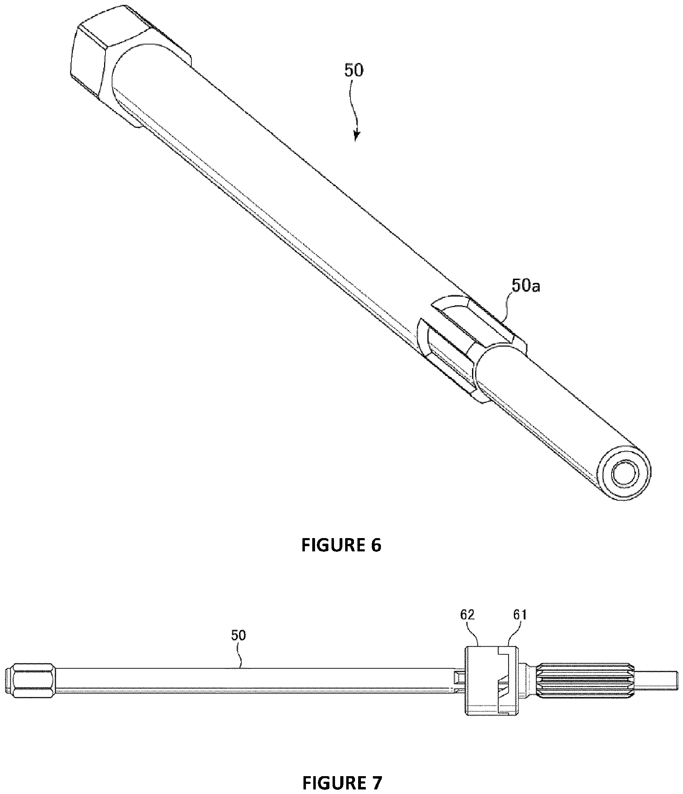

The structure of the second clutch can be explained from the front clutch nut 62 shown in FIG. 5 and the spin shaft 50 shown in FIG. 6.

As described above, the spin shaft 50 can be inserted into the centre (axial portion) of the front clutch nut 62 and moves relative to the front clutch nut 62 in the axial direction by a stroke. The spin shaft 50 is adapted to engage with the inner shape of the front clutch nut 62 when the front clutch nut 62 is at the position of the engaging unit 50a. The front end side of the engaging unit 50a of the spin shaft 50 has a cylindrical shape; the engaging unit 50a includes a first portion having a diameter substantially equal to the diameter of the cylindrical shape on the distal end side, and a second portion (small diameter portion) having a smaller diameter than the cylindrical shape on the distal end side. In the engagement unit 50a, a plurality of first portions and second portions are provided. The rear end side of the engaging unit 50a of the spin shaft 50 also has a cylindrical shape, but is formed with a diameter smaller than the diameter of the second portion (small diameter portion). The inner shape of the front clutch nut 62 has a complementary shape so as to fit with the first and second portions of the engagement unit 50a. In a state in which the spin shaft 50 is inserted into the center (axial portion) of the front clutch nut 62, the front clutch nut 62 cannot move to the front end side farther than the engagement unit 50a due to the relationship between the diameters of the front end side and the rear end side of the engagement unit 50a of the spin shaft 50, but it can move to the rear end side. With such a configuration, the engagement of the front clutch nut 62 is released by moving from the engagement unit 50a of the spin shaft 50 to the rear end side. When the rotational force is transmitted to the front clutch nut 62 while the spin shaft 50 and the front clutch nut 62 are engaged, the spin shaft 50 rotates.

### [First Clutch and Second Clutch (Rotating Clutch)]

As described above, the first clutch and the second clutch control whether or not to transmit a rotational force to the spin shaft 50.

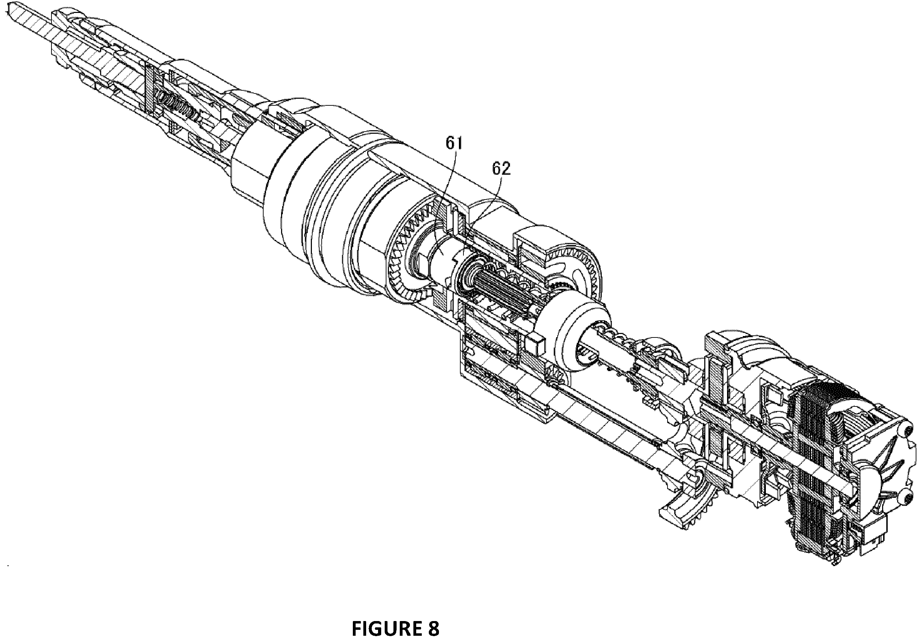

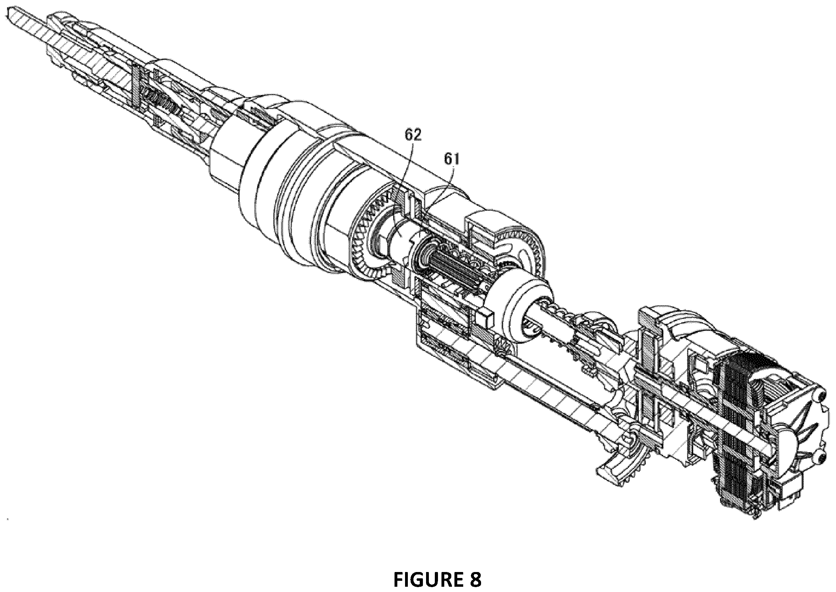

FIG. 7 shows a state in which the spin shaft 50 and the front clutch nut 62 are further connected as the second clutch, in addition to connecting the rear clutch nut 61 and the front clutch nut 62 as the first clutch. FIG. 8 is a perspective view showing a state in which the first clutch and the second clutch of FIG. 7 are incorporated in the entire blind nut fastening apparatus.

In the state of FIG. 7, the rotational force from the joint shaft 23 is transmitted to the spin shaft 50 via the rear clutch nut 61 and the front clutch nut 62, and the mandrel 75 can be rotated.

In the state of FIG. 7, the rear clutch nut 61 and the front clutch nut 62 are engaged with each other and rotate integrally; however, when the relative position of the spin shaft 50 with respect to the rear clutch nut 61 and the front clutch nut 62 moves in the axial direction and the engagement between the spin shaft 50 and the front clutch nut 62 is released, the rotation force is not transmitted to the spin shaft 50. In addition, when the mounting of the nut is completed and the rotational load applied to the rear clutch nut 61 exceeds a certain value, due to the above-mentioned shape characteristics of the rear clutch nut 61 and the front clutch nut 62, the first inclined surface 61C of the rear clutch nut 61 and the second inclined surface 62D of the front clutch nut 62 slip, the engagement thereof is released, and the rotational force is not transmitted to the spin shaft 50. That is, the first clutch and the second clutch are configured to be disengaged by a rotational load or a stroke.

### [Third Clutch (Stroke Clutch)]

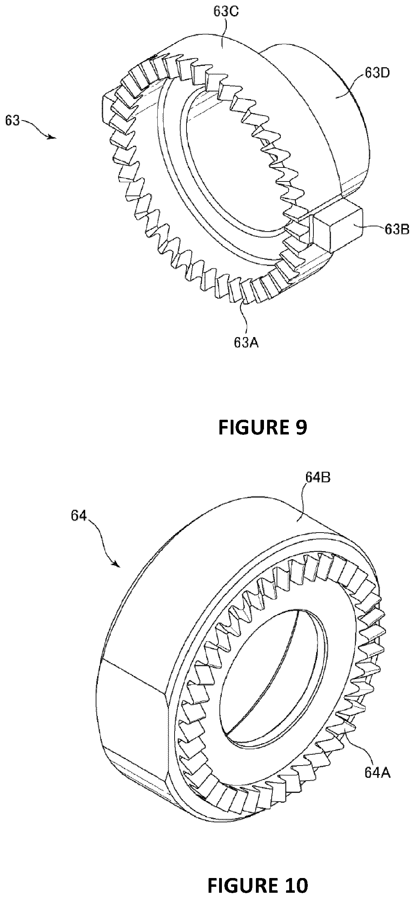

The structure of the third clutch (herein termed the "stroke clutch") can be explained from the spindle clutch 63 shown in FIG. 9 and the nut clutch 64 shown in FIG. 10.

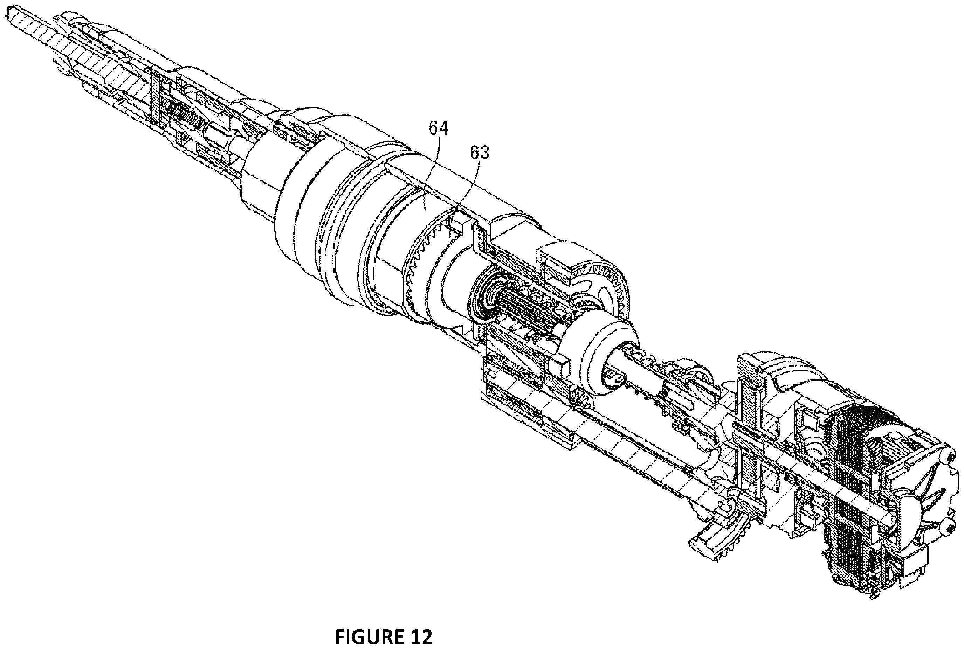

FIG. 11 shows a state in which the spindle clutch 63 and the nut clutch 64 are connected. FIG. 12 is a perspective view showing a state in which the third clutch of FIGS. 9 and 10 is incorporated in the entire blind nut fastening apparatus.

The spindle clutch 63 has a cylindrical unit 63D connected to the spindle 14, and a flange unit 63C formed at a stage preceding the cylindrical unit 63D. The flange unit 63C has an engaging unit 63A for engaging with the nut clutch 64 of the preceding stage. A projection 63B protruding outward in the radial direction is formed on a part of the flange unit 63C.

The protrusion 63B is engaged with an axially extending slot (not shown) formed in the spindle 14 and rotates the spindle clutch 63 as the spindle 14 rotates.

The nut clutch 64 is disposed in the preceding stage of the spindle clutch 63, and has a cylindrical unit 64B, and an engaging unit 64A for engaging the spindle clutch 63. The engaging unit 64A scrolls the ball screw shaft 36 in the axial direction by rotating the ball screw nut 44 at the preceding stage with the rotation of the engaging unit 63A of the spindle clutch 63. As will be described later, the third clutch strokes in the direction of pulling in the mandrel 75 at the time of engagement. In this case, if the stroke exceeds a predetermined distance, the nut clutch 64 disengages from the spindle clutch 63 and prevents overstroke. Together, the ball screw shat 36 and ball screw nut 44 comprise the stroke mechanism of the present invention and operate to move the mandrel 75 axially.

The engaging unit 64A scrolls the ball screw shaft 36 in the axial direction by rotating the ball screw nut 44 at the preceding stage with the rotation of the engaging unit 63A of the spindle clutch 63. As will be described later, the third clutch strokes in a direction to pull in the mandrel 75 at the time of engagement; however, in this case, when the stroke exceeds a predetermined distance, the nut clutch 64 is disengaged from the spindle clutch 63, and an overstroke can be prevented.

The motor control circuit 8 operates the brushless motor 12 in response to inputs from the trigger 6, the mandrel pressing detection switch 10, and the Forward/Reverse ("FR") lever switch 4. For example, when the screw of the blind nut 70 is deformed due to the excessive stroke of the mandrel, the forcible reverse rotation may be performed by turning on the FR lever switch 4. When the FR lever switch 4 rotates in the reverse direction, the first clutch and the second clutch do not disengage due to the above-described structure. The rotation torque can be reliably transmitted to the mandrel 75.

### [Operation Flow]

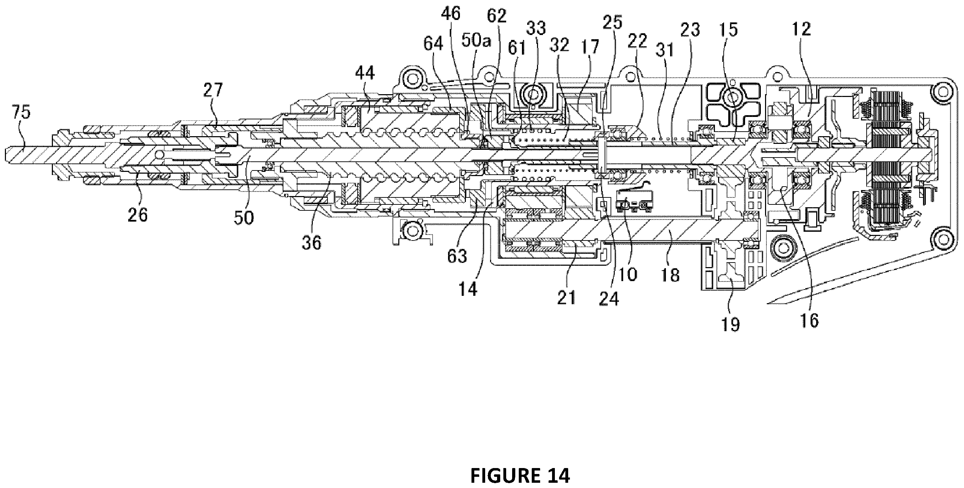

The operation of each component corresponding to the processing from mounting of the blind nut 70 to the mandrel 75 to fastening to the member to be mounted 72 will be described with reference to FIGS. 14 to 19.

FIG. 14 is a cross-sectional view showing an initial state of the blind nut fastening apparatus 1. The switch 10 is open.

FIG. 15 is a cross-sectional view showing a state in which the blind nut 70 is arranged at the tip of the mandrel 75 and mounting is started. When a user presses the blind nut 70 in the axial direction of the mandrel 75 in a state in which the blind nut 70 is disposed at the tip of the mandrel 75, the mandrel 75 strokes rightward in FIG. 15, and in conjunction therewith, the spin shaft 50 and the detection collar 22 also stroke rightward. When this happens, the spin shaft 50 becomes engaged with the inner shape of the front clutch nut 62 when the front clutch nut 62 is at the position of the engagement portion 50a, the switch 10 is connected to the detection collar 22 and is closed, and the brushless motor 12 operates. At this time, the rear clutch nut 61 and the front clutch nut 62 are also engaged with each other. Therefore, the rotational force from the joint shaft 23 is transmitted to the rear clutch nut 61, the front clutch nut 62, and the spin shaft 50 to rotate integrally, and the rotation of the mandrel 75 is started. The rear clutch nut 61 is supported by a spring 32 disposed in the interval with the pin holder 25 at the subsequent stage; at this time, the rear clutch nut 61 presses the front clutch nut 62 forward by the spring 32 to maintain the state of being engaged with the front clutch nut 62.

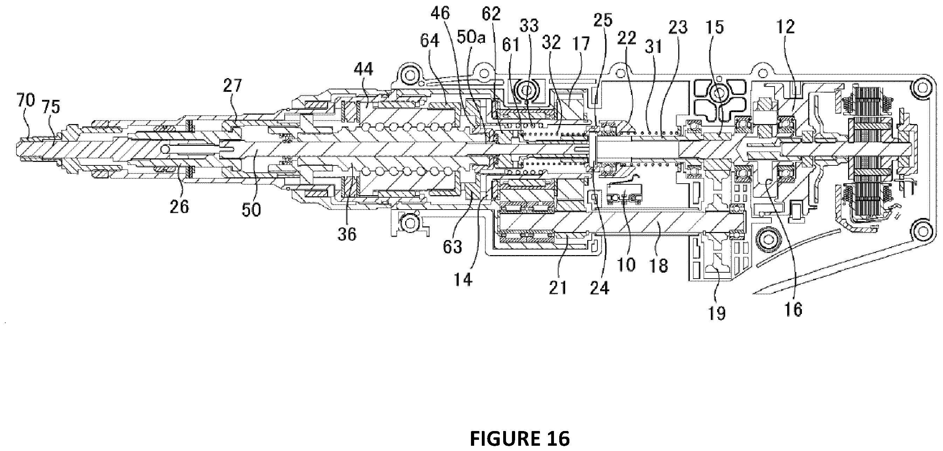

FIG. 16 is a cross-sectional view showing a state in which the mounting of the blind nut 70 to the mandrel 75 is completed. From the state of FIG. 15, as the mandrel 75 rotates, the blind nut 70 is gradually mounted on the mandrel 75, and the mandrel 75 gradually strokes toward the distal end. Then, when the mandrel 75 and the spin shaft 50 stroke in the distal direction to a position where the blind nut 70 is completely attached to the mandrel 75, the engaging unit 50a of the spin shaft 50 moves to a position displaced in the distal direction by the front clutch nut 62, and the engaging unit 50a of the spin shaft 50 does not engage with the inner shape (second clutch) of the front clutch nut 62. As a result, the rotational force is not transmitted to the mandrel 75 and the spin shaft 50, and the rotation of the mandrel 75 is also stopped. In addition, when the mounting of the nut is completed and the rotational load applied to the rear clutch nut 61 exceeds a certain value, due to the above-mentioned shape characteristics of the rear clutch nut 61 and the front clutch nut 62, their engagement is released, and the rotational force is not transmitted to the spin shaft 50. Also, at this timing, the spin shaft 50 and the detection collar 22 are also stroked to the left, the switch 10 does not come into contact with the detection collar 22, and the switch 10 is opened.

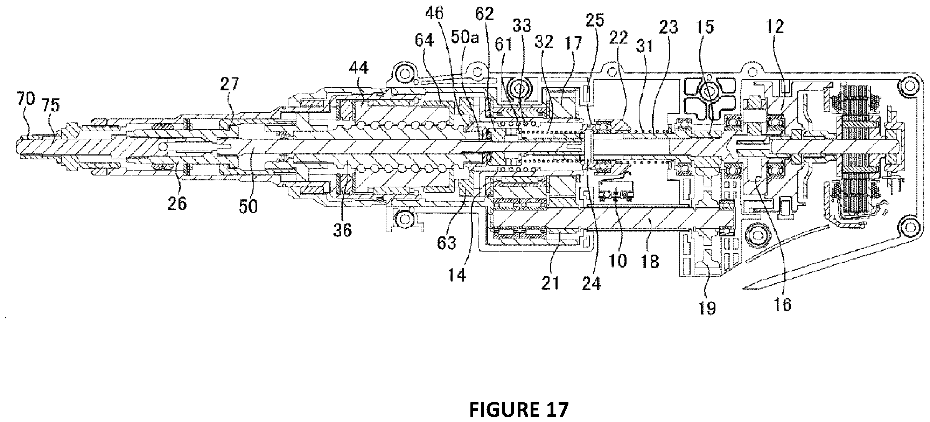

FIG. 17 is a cross-sectional view showing a state in which the engagement between the rear clutch nut 61 and the front clutch nut 62 (first clutch) is released after the mounting of the blind nut 70 is completed. When the mounting of the nut is completed, as described above, the rotational load applied to the rear clutch nut 61 exceeds a predetermined value. At this time, due to the above-mentioned shape characteristics of the rear clutch nut 61 and the front clutch nut 62, their engagement is released, and the rotational force to the spin shaft 50 is not transmitted. The rear clutch nut 61 may be configured to be held by the spring 32 that repeats expansion and contraction when the first clutch is disengaged.

In the state in which the installation of the blind nut 70 is completed, the ball screw shaft 36 is stroked backward by rotating the spindle 14 and the ball screw nut 44 a predetermined number of times, and as compared with the initial state of FIG. 14, a gap between the spin-pull head 26 and the spin-pull head case 27 is eliminated. This can be realized by setting the distance between the spin-pull head 26 and the spin-pull head case 27 in advance from the relationship between the brushless motor 12, the rotation speed, and the stroke distance.

Accordingly, when the trigger 6 is pulled in this state, the rotation of the brushless motor 12 is transmitted to the third clutch (the spindle clutch 63 and the nut clutch 64) via the spindle 14, the ball screw nut 44 is rotated by the rotational force from the third clutch, and the ball screw shaft 36 is moved in the direction of retraction. At this time, the spin-pull head case 27 linked to the ball screw shaft 36 is retracted without rotating the spin shaft 50 and the mandrel 75 via the spin-pull head 26, and the blind nut 70 is fastened to the member to which it is to be mounted.

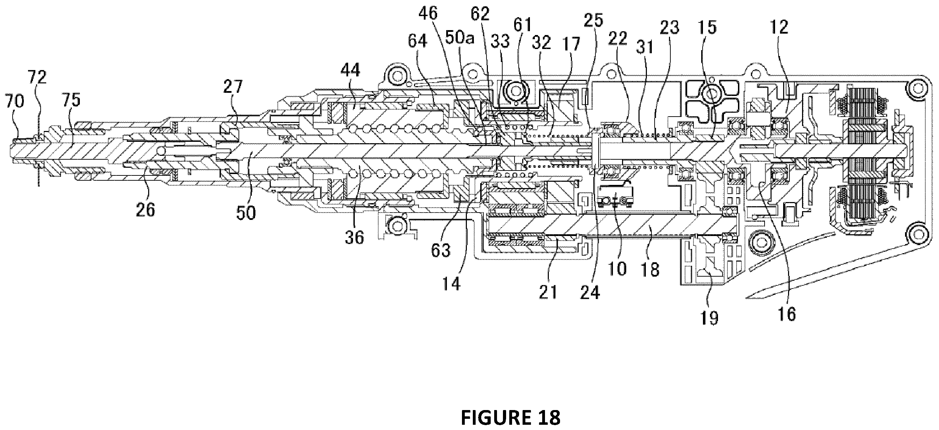

FIG. 18 is a cross-sectional view showing a state in which the blind nut 70 is fastened to the member to be attached 72. As described above, in the state in which the blind nut 70 is mounted on the mandrel 75, the engagement of the first clutch and the second clutch (rotating clutch) is released, and the rotational force to the spin shaft 50 is not transmitted.

Here, the number of rotations of the brushless motor 12 corresponding to the amount of strokes from pulling the trigger 6 to completion of the engagement is set in advance by the control unit; in the fastening operation, the rotation direction of the brushless motor 12 may be automatically switched to the reverse rotation at the timing when the brushless motor 12 rotates by the set number of rotations (stroke management). Alternatively, setting may also be performed by calculating the fastening load from the load current flowing to the brushless motor at the time of fastening, and automatically switching the rotation direction of the brushless motor 12 to reverse rotation at the timing when the set fastening load is reached (management of fastening load).

After the blind nut 70 is fastened, the reverse rotation of the brushless motor 12 causes the second clutch to move toward the distal end relative to the spin shaft 50, and the second clutch is connected again. Then, the reverse rotation of the brushless motor 12 is transmitted to the mandrel 75, and the blind nut 70 can be removed from the mandrel. At this time, when the mandrel 75 is moved back to the original position so that the mandrel 75 does not overstroke in the forward direction, the third clutch is disengaged.

The spindle clutch 63 is supported by a spring 33 disposed between the spindle clutch 63 and the subsequent spindle 14; at this time, the spindle clutch 63 presses the nut clutch 64 forward by the spring 33 to maintain the state of engagement with the nut clutch 64.

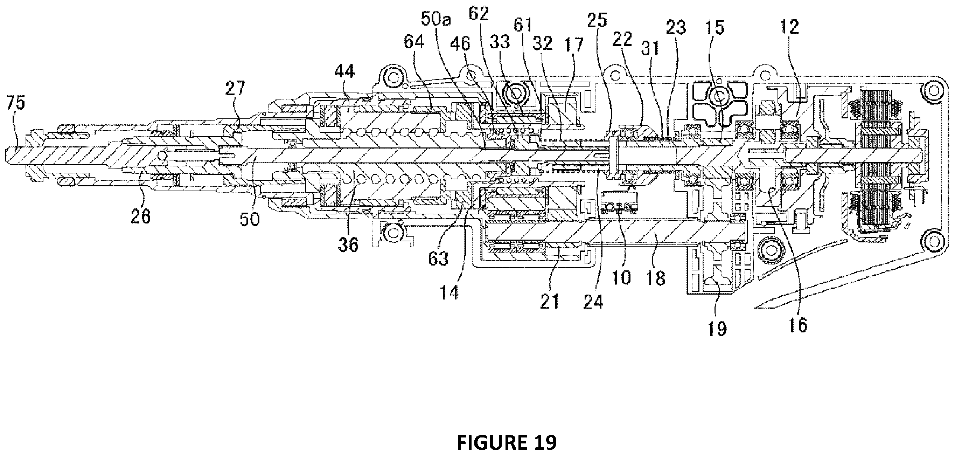

FIG. 19 is a cross-sectional view showing a state in which the third clutch is disengaged in order to prevent an overstroke of retraction of the spin shaft 50. When the retraction stroke of the spin shaft 50 reaches a predetermined distance, the tail cap 46 attached to the ball screw shaft 36 moves the spindle clutch 63 of the third clutch toward the rear end to disengage the third clutch. Thereby, the failure of the tool can be prevented without using a sensor.

According to the present invention, the mounting operation and the fastening operation can be individually performed, and the mounting operation is automatically processed, so that the mounting operation and the fastening operation can be performed by one trigger operation.

In this regard, by mounting the first and second clutches and the third clutch, the mounting operation and the fastening operation can be performed without a sensor for confirming the stroke position inside the tool. In addition, the rotation and the stroke of the mandrel can be controlled by controlling two power transmission systems with one motor.

Those skilled in the art will appreciate that the term "stroke" as used herein is intended to cover an axial movement of the mandrel with no rotational element.

As described above, the embodiments and working examples of the blind nut fastening apparatus according to the present invention have been described; however, it is easily understood that the present invention is not limited to the above-described working examples, and various changes can be made thereto. As long as they fall within the scope of matters described in each claim of the claims and matters equivalent thereto, they are naturally included in the technical scope of the present invention. In the above working examples, the engagement of the clutch was based on a predetermined shape, but this is merely an example, and the present invention is not limited to this specific example.

### [Description of Reference Numerals]

- 1: Blind nut fastening apparatus
- 2: Display
- 3: Handle
- 4: FR lever switch
- 5: Battery
- 6: Trigger
- 7: Nose
- 8: Motor control circuit
- 9: Motor unit
- 10: Switch
- 11: Power transmission unit
- 12: Brushless motor
- 13: Electric motor
- 13A: Hall element
- 14: Spindle
- 15: Motor gear
- 16: 1st reduction unit (planet
- 17: Spindle gear
- 18: Second shaft
- 19: Rear gear
- 21: Front gear
- 22: Detection collar
- 23: Joint shaft
- 24: Pin

- 25: Pin holder
- 26: Spin pull head
- 27: Spin pull head case
- 31: Spring
- 32: Spring
- 33: Spring
- 36: Ball screw shaft
- 44: Ball screw nut
- 46: Tail cap
- 50: Spin shaft
- 50a: Engagement unit
- 61: Rear clutch nut
- 61A: 1st fan-shaped portion
- 61B: 1st vertical plane
- 61C: 1st slope
- 61D: Rear end portion
- 62: Front clutch nut
- 62A: Cylindrical unit
- 62B: Second fan-shaped portion
- 62C: Second vertical surface
- 62D: Second inclined surface
- 63: Spindle clutch
- 63A: Engaging unit
- 63B: Projection
- 63C: Flange unit
- 63D: Cylindrical unit
- 64: Nut clutch
- 64A: Engaging unit

- 64B: Cylindrical unit
- 70: Blind nut
- 72: Member to be attached
- 75: Mandrel

## Claims

1. A fastening apparatus (1) having front and rear ends
the fastening apparatus comprising a power transmission unit (11) configured to transmit the rotation of an electric motor (9), having a first transmission system (15, 19, 23, 61, 62);
a joint shaft (23) that is arranged in front of the electric motor and is rotated by transmitting power by the first transmission system of the power transmission unit; Z wherein
the fastening apparatus is for fastening a blind nut to a member (72) to which it is to be mounted;
the power transmission unit (11) comprises a second transmission system (14, 15, 18, 19, 21, 63, 64);
a spindle (14) that is arranged in front of the electric motor and that is rotated by transmitting power by the second transmission system of the power transmission unit;
a spin shaft (50) that grips a shaft unit of a mandrel (75) and rotates the mandrel with rotation of the joint shaft;
a rotating clutch (61, 62) for transmitting the rotating force of the joint shaft to the spin shaft; and
a stroke clutch (63, 64) that is disposed between a stroke mechanism (36, 44) that strokes the mandrel with the rotation of the spindle and the spindle, and that transmits the rotation of the spindle to the stroke mechanism;
wherein the rotation clutch is provided with a rear clutch nut (61) and a front clutch nut (62);
the rear clutch nut transmits the rotational force of the joint shaft to the front clutch nut when engaged with the front clutch nut, but may be disengaged from the front clutch nut by a predetermined rotational load;
the front clutch nut has a cylindrical shape, the spin shaft can be arranged at an axial centre unit, and is configured so that when it is engaged with an engagement unit (50a) of the spin shaft a rotational force is transmitted to the spin shaft, but is disengaged by a predetermined stroke toward the tip of the spin shaft;
the stroke clutch is provided with a spindle clutch (63) and a nut clutch (64); and the spindle clutch transmits the rotational force of the spindle to the stroke mechanism when engaged with the nut clutch, but is disengaged from the nut clutch by a predetermined stroke toward the rear end of the mandrel.

2. The fastening apparatus according to Claim 1, wherein the stroke mechanism that strokes the mandrel is provided with a cylindrical ball screw nut (44) that rotates with the rotation of the spindle clutch and the nut clutch, and a ball screw shaft (36) that is established at the centre of the ball screw nut and moves in the axial direction with the rotation of the ball screw nut to stroke the mandrel.

3. The fastening apparatus according to claim 2, further provided with a spin-pull head case (27) that is arranged on a tip side of the ball screw shaft and moves in the same direction as the ball screw shaft with the stroke of the ball screw shaft; wherein when the spin-pull head case moves a predetermined distance in the rear end direction, it is fitted with a spin-pull head disposed on the front end side of the spin shaft, and moves so as to retract the mandrel together with the spin-pull head.

4. The fastening apparatus according to any one of Claims 1 to 3, further provided with a switch (10) for starting the electric motor by pressing the mandrel in the axial direction; wherein, when the tip of the mandrel is pressed toward the rear end of the apparatus in a state in which the blind nut is disposed at the tip of the mandrel, the switch of the electric motor is closed by the rotational force from the electric motor and the mandrel is rotated via the spin shaft engaged with the rotating clutch.

5. The fastening apparatus according to claim 4, wherein; when the blind nut is mounted on the mandrel, the mandrel and the spin shaft stroke, so that the spin shaft is disengaged from the rotation clutch, and the switch is opened; and in a state in which the spin shaft is disengaged from the rotating clutch, when the electric motor is started, the spindle is rotated, and the mandrel is stroked in the rear end direction via the stroke mechanism, so that the blind nut is fastened to the member to be mounted.

6. The fastening apparatus according to any one of the preceding claims, wherein the rear clutch nut has a cylindrical unit (64B) and a flange unit (63C) at one end of the cylindrical unit, and a plurality of first fan-shaped portions (61A) are formed on a front surface of the flange unit; the first fan-shaped portions each having a first vertical surface (61B) having one end in the circumferential direction perpendicular to an end surface of the flange unit, and at the other end, a first inclined surface (61C) inclined with respect to the end surface of the flange unit, and which are configured to rotate integrally with the joint shaft.

7. The fastening apparatus according to claim 6, wherein the front clutch nut has a plurality of second fan-shaped portions (62B) having a shape complementary to the first fan-shaped portions; the second fan-shaped portions each have a second vertical surface (62C) having one end in the circumferential direction perpendicular to an end surface of the front clutch nut, and the other end a second inclined surface inclined with respect to the end surface of the front clutch unit; the second vertical surface of the second fan-shaped portions of the front clutch nut is capable of engaging the first vertical surface of the first fan-shaped portions of the rear clutch nut; the second inclined surface of the second fan-shaped portions of the front clutch nut is capable of engaging the first inclined surface of the first fan-shaped portions of the rear clutch nut; and the front clutch nut is configured to rotate integrally with the rear clutch nut.

8. The fastening apparatus according to either claim 6 or claim 7, wherein when the blind nut is mounted on the mandrel and the spin shaft cannot rotate, the first inclined surface of the first fan-shaped portion of the rear clutch nut slips relative to the second inclined surface of the second fan-shaped portion of the front clutch nut slip so that the rear clutch nut moves rearward of the apparatus.

9. The fastening apparatus according to any one of claims 1 to 4, wherein the engagement unit (50a) of the spin shaft has a plurality of small-diameter portions having a diameter smaller than a diameter of a columnar shape on the distal end side of the engagement unit, the rear end side of the engagement unit of the spin shaft has a diameter smaller than the diameter of the small diameter portion of the engagement unit, and the cylindrical inner shape of the front clutch nut has a shape complementary to the engagement unit.

## Patentansprüche

1. Befestigungseinrichtung (1), die vordere und hintere Enden aufweist,
wobei die Befestigungseinrichtung eine Leistungsübertragungseinheit (11) umfasst, die konfiguriert ist, um die Drehung eines Elektromotors (9), der ein erstes Übertragungssystem (15, 19, 23, 61, 62) aufweist, zu übertragen;
eine Gelenkwelle (23), die vor dem Elektromotor angeordnet ist und durch das Übertragen von Leistung durch das erste Übertragungssystem der Leistungsübertragungseinheit gedreht wird;
wobei die Befestigungseinrichtung für die Befestigung einer Blindmutter an einem Element (72), an dem sie montiert werden soll, vorgesehen ist;
die Leistungsübertragungseinheit (11) ein zweites Übertragungssystem (14, 15, 18, 19, 21, 63, 64) umfasst;
eine Spindel (14), die vor dem Elektromotor angeordnet ist und die durch Leistungsübertragung durch das zweite Übertragungssystem der Leistungsübertragungseinheit gedreht wird;
eine Drehwelle (50), die eine Welleneinheit eines Dorns (75) ergreift und den Dorn mit der Drehung der Gelenkwelle dreht;
eine Drehkupplung (61, 62), um die Drehkraft der Gelenkwelle auf die Drehwelle zu übertragen; und
eine Hubkupplung (63, 64), die zwischen einem Hubmechanismus (36, 44), der den Dorn mit der Drehung der Spindel hubbewegt, und der Spindel angeordnet ist und welche die Drehung der Spindel auf den Hubmechanismus überträgt;
wobei die Drehkupplung mit einer hinteren Kupplungsmutter (61) und einer vorderen Kupplungsmutter (62) versehen ist;
die hintere Kupplungsmutter die Drehkraft der Gelenkwelle auf die vordere Kupplungsmutter überträgt, wenn sie mit der vorderen Kupplungsmutter in Eingriff steht, aber durch eine vorbestimmte Drehlast von der vorderen Kupplungsmutter ausgekuppelt werden kann;
die vordere Kupplungsmutter eine zylindrische Form aufweist, die Drehwelle an einer axialen Zentrumseinheit angeordnet werden kann und so konfiguriert ist, dass, wenn sie mit einer Eingriffseinheit (50a) der Drehwelle in Eingriff steht, eine Drehkraft auf die Drehwelle übertragen wird, aber durch einen vorbestimmten Hub zu der Spitze der Drehwelle ausgekuppelt wird;
die Hubkupplung mit einer Spindelkupplung (63) und einer Mutterkupplung (64) versehen ist; und
die Spindelkupplung die Drehkraft der Spindel auf den Hubmechanismus überträgt, wenn sie mit der Mutterkupplung in Eingriff steht, aber von der Mutterkupplung durch einen vorbestimmten Hub zu dem hinteren Ende des Dorns ausgekuppelt wird.

2. Befestigungseinrichtung nach Anspruch 1, wobei der Hubmechanismus, der den Dorn hubbewegt, mit einer zylindrischen Kugelgewindemutter (44) versehen ist, die sich mit der Drehung der Spindelkupplung und der Mutterkupplung dreht, und mit einer Kugelgewindewelle (36), die im Zentrum der Kugelgewindemutter eingerichtet ist und sich in der axialen Richtung mit der Drehung der Kugelgewindemutter bewegt, um den Dorn hubzubewegen.

3. Befestigungseinrichtung nach Anspruch 2, weiter versehen mit einem Dreh-Zug-Kopfgehäuse (27), das an einer Spitzenseite der Kugelgewindespindel angeordnet ist und sich in der gleichen Richtung wie die Kugelgewindespindel mit dem Hub der Kugelgewindespindel bewegt; wobei das Dreh-Zug-Kopfgehäuse, wenn es sich um einen vorbestimmten Abstand in Richtung des hinteren Endes bewegt, mit einem Dreh-Zug-Kopf ausgestattet ist, der an der vorderen Endseite der Kugelgewindespindel angeordnet ist, und sich so bewegt, dass der Dorn zusammen mit dem Dreh-Zug-Kopf zurückgezogen wird.

4. Befestigungseinrichtung nach einem der Ansprüche 1 bis 3, weiter versehen mit einem Schalter (10) zum Starten des Elektromotors durch Drücken des Dorns in der axialen Richtung; wobei, wenn die Spitze des Dorns in einem Zustand, in dem die Blindmutter an der Spitze des Dorns angeordnet ist, zu dem hinteren Ende der Einrichtung gedrückt wird, der Schalter des Elektromotors durch die Drehkraft des Elektromotors geschlossen wird und der Dorn über die mit der Drehkupplung in Eingriff stehende Drehwelle gedreht wird.

5. Befestigungseinrichtung nach Anspruch 4, wobei; wenn die Blindmutter auf dem Dorn montiert ist, der Dorn und die Spindelwelle einen Hub ausführen, sodass die Drehwelle von der Drehkupplung ausgekuppelt wird und der Schalter geöffnet wird; und in einem Zustand, in dem die Drehwelle von der Drehkupplung ausgekuppelt ist, wenn der Elektromotor gestartet wird, die Spindel gedreht wird und der Dorn über den Hubmechanismus in Richtung des hinteren Endes hubbewegt, sodass die Blindmutter an dem zu montierenden Element befestigt wird.

6. Befestigungseinrichtung nach einem der vorstehenden Ansprüche, wobei die hintere Kupplungsmutter eine zylindrische Einheit (64B) und eine Flanscheinheit (63C) an einem Ende der zylindrischen Einheit aufweist, und eine Vielzahl erster fächerförmiger Abschnitte (61 A) auf einer vorderen Oberfläche der Flanscheinheit ausgebildet ist; wobei die ersten fächerförmigen Abschnitte jeweils eine erste vertikale Oberfläche (61B) aufweisen, die ein Ende in der Umfangsrichtung senkrecht zu einer Endoberfläche der Flanscheinheit aufweist, und am anderen Ende eine erste geneigte Oberfläche (61C), die in Bezug auf die Endoberfläche der Flanscheinheit geneigt ist, und die konfiguriert sind, um sich integral mit der Gelenkwelle zu drehen.

7. Befestigungseinrichtung nach Anspruch 6, wobei die vordere Kupplungsmutter eine Vielzahl von zweiten fächerförmigen Abschnitten (62B) aufweist, die eine zu den ersten fächerförmigen Abschnitten komplementäre Form aufweisen; die zweiten fächerförmigen Abschnitte jeweils eine zweite vertikale Oberfläche (62C) aufweisen, deren eines Ende in der Umfangsrichtung senkrecht zu einer Endoberfläche der vorderen Kupplungsmutter verläuft und deren anderes Ende eine zweite geneigte Oberfläche in Bezug auf die Endoberfläche der vorderen Kupplungseinheit aufweist; die zweite vertikale Oberfläche der zweiten fächerförmigen Abschnitte der vorderen Kupplungsmutter in der Lage ist, mit der ersten vertikalen Oberfläche der ersten fächerförmigen Abschnitte der hinteren Kupplungsmutter in Eingriff zu kommen; die zweite geneigte Oberfläche der zweiten lüfterförmigen Abschnitte der vorderen Kupplungsmutter in der Lage ist, mit der ersten geneigten Oberfläche der ersten fächerförmigen Abschnitte der hinteren Kupplungsmutter in Eingriff zu kommen; und die vordere Kupplungsmutter konfiguriert ist, um sich integral mit der hinteren Kupplungsmutter zu drehen.

8. Befestigungseinrichtung nach Anspruch 6 oder Anspruch 7, wobei, wenn die Blindmutter auf dem Dorn montiert ist und die Drehwelle sich nicht drehen kann, die erste geneigte Oberfläche des ersten fächerförmigen Abschnitts der hinteren Kupplungsmutter relativ zu der zweiten geneigten Oberfläche des zweiten fächerförmigen Abschnitts der vorderen Kupplungsmutter rutscht, sodass sich die hintere Kupplungsmutter hinter die Einrichtung bewegt.

9. Befestigungseinrichtung nach einem der Ansprüche 1 bis 4, wobei die Eingriffseinheit (50a) der Drehwelle eine Vielzahl von Abschnitten mit kleinem Durchmesser aufweist, deren Durchmesser kleiner ist als der Durchmesser einer Säulenform an der distalen Endseite der Eingriffseinheit, die hintere Endseite der Eingriffseinheit der Drehwelle einen Durchmesser aufweist, der kleiner ist als der Durchmesser des Abschnitts mit kleinem Durchmesser der Eingriffseinheit, und die zylindrische Innenform der vorderen Kupplungsmutter eine zur Eingriffseinheit komplementäre Form aufweist.

## Revendications

1. Appareil de fixation (1) comportant des extrémités avant et arrière
l'appareil de fixation comprenant une unité de transmission de puissance (11) configurée pour transmettre la rotation d'un moteur électrique (9), comportant un premier système de transmission (15, 19, 23, 61, 62) ;
un arbre de transmission (23) qui est agencé devant le moteur électrique et est mis en rotation par la transmission d'une puissance par le premier système de transmission de l'unité de transmission de puissance ;
dans lequel l'appareil de fixation est destiné à fixer un écrou borgne sur un organe (72) sur lequel il est monté ;
l'unité de transmission de puissance (11) comprend un second système de transmission (14, 15, 18, 19, 21, 63, 64) ;
une broche (14) qui est agencée devant le moteur électrique et est mise en rotation par la transmission d'une puissance par le second système de transmission de l'unité de transmission de puissance ;
un arbre de rotation (50) qui saisit une unité d'arbre d'un mandrin (75) et qui fait tourner le mandrin avec une rotation de l'arbre de transmission ;
un embrayage de rotation (61, 62) pour transmettre la force de rotation de l'arbre de transmission à l'arbre de rotation ; et
un embrayage de course (63, 64) qui est disposé entre un mécanisme de course (36, 44) qui fait avancer le mandrin avec la rotation de la broche et la broche, et qui transmet la rotation de la broche au mécanisme de course ;
dans lequel l'embrayage de rotation est pourvu d'un écrou d'embrayage arrière (61) et d'un écrou d'embrayage avant (62) ;
l'écrou d'embrayage arrière transmet la force de rotation de l'arbre de transmission à l'écrou d'embrayage avant lorsqu'il est engagé avec l'écrou d'embrayage avant, mais peut être désengagé de l'écrou d'embrayage avant par une charge de rotation prédéterminée ;
l'écrou d'embrayage avant présente une forme cylindrique, l'arbre de transmission peut être agencé à une unité centrale axiale, et est configuré de sorte que, lorsqu'il est engagé avec une unité d'engagement (50a) de l'arbre de rotation, une force de rotation soit transmise à l'arbre de transmission, mais est désengagé par une course prédéterminée vers la pointe de l'arbre de transmission ;
l'embrayage de course est pourvu d'un embrayage de broche (63) et d'un embrayage d'écrou (64) ; et
l'embrayage de broche transmet la force de rotation de la broche au mécanisme de course lorsqu'il est engagé avec l'embrayage d'écrou, mais est désengagé de l'embrayage d'écrou par une course prédéterminée vers l'extrémité arrière du mandrin.

2. Appareil de fixation selon la revendication 1, dans lequel le mécanisme de course qui fait avancer le mandrin est pourvu d'un écrou de vis à bille cylindrique (44) qui tourne avec la rotation de l'embrayage de broche et de l'embrayage d'écrou, et un arbre de vis à bille (36) qui est établi au centre de l'écrou de vis à bille et se déplace dans la direction axiale avec la rotation de l'écrou de vis à bille pour faire avancer le mandrin.

3. Appareil de fixation selon la revendication 2, pourvu en outre d'un boîtier de tête de rotation-traction (27) qui est agencé sur un côté de pointe de l'arbre de vis à bille et se déplace dans la même direction que l'arbre de vis à bille avec la course de l'arbre de vis à bille ; dans lequel, lorsque le boîtier de tête de rotation-traction se déplace d'une distance prédéterminée dans la direction d'extrémité arrière, il est ajusté avec une tête de rotation-traction disposée sur le côté d'extrémité avant de l'arbre de rotation, et se déplace de manière à retirer le mandrin avec la tête de rotation-traction.

4. Appareil de fixation selon l'une quelconque des revendications 1 à 3, pourvu en outre d'un commutateur (10) pour démarrer le moteur électrique par la pression du mandrin dans la direction axiale ; dans lequel, lorsque la pointe du mandrin est pressée vers l'extrémité arrière de l'appareil dans un état dans lequel l'écrou borgne est disposé à la pointe du mandrin, le commutateur du moteur électrique est fermé par la force de rotation du moteur électrique et le mandrin est tourné par l'intermédiaire de l'arbre de rotation engagé avec l'embrayage de rotation.

5. Appareil de fixation selon la revendication 4, dans lequel, lorsque l'écrou borgne est monté sur le mandrin, le mandrin et l'arbre de rotation se déplacent, de sorte que l'arbre de rotation soit désengagé de l'embrayage de rotation, et le commutateur est ouvert ; et, dans un état dans lequel l'arbre de rotation est désengagé de l'embrayage de rotation, lorsque le moteur électrique est démarré, la broche est tournée, et le mandrin est déplacé dans la direction d'extrémité arrière par l'intermédiaire du mécanisme de course, de sorte que l'écrou borgne soit fixé sur l'organe à monter.

6. Appareil de fixation selon l'une quelconque des revendications précédentes, dans lequel l'écrou d'embrayage arrière comporte une unité cylindrique (64B) et une unité de bride (63C) à une extrémité de l'unité cylindrique, et une pluralité de premières parties en forme d'éventail (61A) sont formées sur une surface avant de l'unité de bride ; les premières parties en forme d'éventail comportent chacune une première surface verticale (61B) comportant une extrémité dans la direction circonférentielle perpendiculaire à une surface d'extrémité de l'unité de bride, et, à l'autre extrémité, une première surface inclinée (61C) inclinée par rapport à la surface d'extrémité de l'unité de bride, et qui sont configurées pour tourner solidairement avec l'arbre de transmission.

7. Appareil de fixation selon la revendication 6, dans lequel l'écrou d'embrayage avant comporte une pluralité de secondes parties en forme d'éventail (62B) présentant une forme complémentaire de celle des premières parties en forme d'éventail ; chacune des secondes parties en forme d'éventail (62C) comporte une extrémité dans la direction circonférentielle perpendiculaire à une surface d'extrémité de l'écrou d'embrayage avant, et, à l'autre extrémité, une seconde surface inclinée qui est inclinée par rapport à la surface d'extrémité de l'unité d'embrayage avant ; la seconde surface verticale des secondes parties en forme d'éventail de l'écrou d'embrayage avant est capable de s'engager avec la première surface verticale des premières parties en forme d'éventail de l'écrou d'embrayage arrière ; la seconde surface inclinée des secondes parties en forme d'éventail de l'écrou d'embrayage avant est capable de s'engager avec la première surface inclinée des premières parties en forme d'éventail de l'écrou d'embrayage arrière ; et l'écrou d'embrayage avant est configuré pour tourner solidairement avec l'écrou d'embrayage arrière.

8. Appareil de fixation selon la revendication 6 ou 7, dans lequel, lorsque l'écrou borgne est monté sur le mandrin et l'arbre de rotation ne peut pas tourner, la première surface inclinée de la première partie en forme d'éventail de l'écrou d'embrayage arrière glisse par rapport à la seconde surface inclinée de la seconde partie en forme d'éventail de l'écrou d'embrayage avant de sorte que l'écrou d'embrayage arrière se déplace vers l'arrière de l'appareil.

9. Appareil de fixation selon l'une quelconque des revendications 1 à 4, dans lequel l'unité d'engagement (50a) de l'arbre de rotation comporte une pluralité de parties de petit diamètre présentant un diamètre inférieur à un diamètre d'une forme de colonne du côté d'extrémité distale de l'unité d'engagement, le côté d'extrémité arrière de l'unité d'engagement de l'arbre de rotation présente un diamètre inférieur au diamètre de la partie de petit diamètre de l'unité d'engagement, et la forme intérieure cylindrique de l'écrou d'embrayage avant présente une forme complémentaire de celle de l'unité d'engagement.
